# EUROPEAN PATENT APPLICATION

(11) **EP 4 838 794 A1**
(43) Date of publication of application: **11.11.2026**
(21) Application number: 24923171.3
(22) Date of filing: 28.05.2024
(51) Int. Cl.: H04B 7/0456

(54) **COMMUNICATION METHOD, COMMUNICATION APPARATUS, AND COMMUNICATION SYSTEM**

(30) Priority: 06.02.2024 CN 202410166514
(71) Applicant: Honor Device Co., Ltd., Shenzhen, Guangdong 518040 (CN)
(72) Inventor: WANG, Chao, Shenzhen, Guangdong 518040 (CN); CHI, Liangang, Shenzhen, Guangdong 518040 (CN)
(74) Representative: Gill Jennings & Every LLP
(86) International application number: PCT/CN2024/095750
(87) International publication number: WO 2025/166948

(57) **Abstract**

This application provides a communication method, a communication apparatus, and a communication system. The method includes: A terminal device receives a first transmit precoding matrix indicator TPMI index, where the first TPMI index indicates a first uplink precoding matrix, a number of transmit antenna ports corresponding to the first uplink precoding matrix is 3, the first uplink precoding matrix is obtained based on an order 2M and a phase offset K of phase shift keying PSK modulation, and M is an integer greater than or equal to 3; and sends uplink data based on the first uplink precoding matrix. According to the method, uplink precoding configuration of three antenna ports can be implemented, and uplink throughput can be improved.

## Description

This application claims priority to Chinese Patent Application No. 202410166514.8, filed with the China National Intellectual Property Administration on February 6, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

Currently, a terminal device is usually limited by two transmit chains (transmitter chain, TX), which restricts uplink (uplink, UL) throughput improvement. Although new radio (new radio, NR) supports 4/8 Tx chains, a possibility of commercial use in the short term is very low. Therefore, how to improve UL throughput is a problem that needs to be urgently resolved in the industry currently.

### SUMMARY

This application provides a communication method, a communication apparatus, and a communication system. The communication method provides an uplink precoding matrix corresponding to a number of transmit antenna ports of 3. When the uplink precoding matrix is used for transmission of uplink data, UL throughput can be improved.

According to a first aspect, this application provides a communication method. The method may be performed by a terminal device or a module (for example, a chip) in the terminal device. The method includes: receiving a first transmit precoding matrix indicator (transmit precoder matrix indicator, TPMI) index, where the first TPMI index indicates a first uplink precoding matrix, a number of transmit antenna ports corresponding to the first uplink precoding matrix is 3, the first uplink precoding matrix is obtained based on an order 2M and a phase offset K of phase shift keying (phase shift keying, PSK) modulation, and M is an integer greater than or equal to 3; and
sending uplink data based on the first uplink precoding matrix.

In this embodiment of this application, the terminal device may send the uplink data based on the first uplink precoding matrix corresponding to the number of transmit antenna ports of 3. The method enables the terminal device to support three Tx chains, which can significantly improve UL throughput. It can be learned from experimental data that a peak throughput gain can reach up to 50%.

With reference to the first aspect, in an implementation, the first uplink precoding matrix is a precoding matrix whose number of rows is 3 and whose number of columns is a number of uplink transmission layers.

This embodiment of this application provides an example of a row and column form of the first uplink precoding matrix corresponding to the number of transmit antenna ports of 3, to improve UL throughput.

With reference to the first aspect, in an implementation, the first uplink precoding matrix is a product of a first coefficient and a first matrix, at least one element in the first matrix is *e^{ik}, i is* an imaginary symbol, *k* is obtained based on M and K, the first coefficient is a positive number, and a value range of K is $\left(-\frac{π}{M},\frac{π}{M}\right)$.

With reference to the first aspect, in an implementation, ${e}^{ik} = {e}^{i \left[\frac{\left(n-1\right) π}{M}+K\right]}$, and *n* is a positive integer not greater than 2M.

In this embodiment of this application, the offset K extends a value range of *e^{ik},* and provides more precoding matrices that can support three transmit antenna ports.

With reference to the first aspect, in an implementation, the first uplink precoding matrix includes a zero element.

With reference to the first aspect, in an implementation, a first codebook includes the first uplink precoding matrix, a number of transmit antenna ports corresponding to the first codebook is 3, and an order of PSK modulation that is used by the first codebook is greater than or equal to 6.

With reference to the first aspect, in an implementation, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

*A* is a first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

In this embodiment of this application, W provides more precoding matrices that can support three transmit antenna ports, which can flexibly correspond to various scenarios during actual application.

With reference to the first aspect, in an implementation, each codeword in the second codebook W has a corresponding TPMI index.

With reference to the first aspect, in an implementation, each codeword in the codebook subset of the second codebook W has a corresponding TPMI index.

According to a second aspect, this application provides a communication method. The method may be performed by a network device or a module (for example, a chip) in the network device. The method may include: sending a first TPMI index, where the first TPMI index indicates a first uplink precoding matrix, a number of transmit antenna ports corresponding to the first uplink precoding matrix is 3, the first uplink precoding matrix is obtained based on an order 2M and a phase offset K of PSK modulation, M is an integer greater than or equal to 3, and the first uplink precoding matrix is used to send uplink data.

With reference to the second aspect, in an implementation, the first uplink precoding matrix is a precoding matrix whose number of rows is 3 and whose number of columns is a number of uplink transmission layers.

With reference to the second aspect, in an implementation, the first uplink precoding matrix is a product of a first coefficient and a first matrix, at least one element in the first matrix is *e^{ik}*, *i* is an imaginary symbol, *k* is obtained based on M and K, the first coefficient is a positive number, and a value range of K is $\left(-\frac{π}{M},\frac{π}{M}\right)$.

With reference to the second aspect, in an implementation, ${e}^{ik} = {e}^{i \left[\frac{\left(n-1\right) π}{M}+K\right]}$, and *n* is a positive integer not greater than 2M.

With reference to the second aspect, in an implementation, the first uplink precoding matrix includes a zero element.

With reference to the second aspect, in an implementation, a first codebook includes the first uplink precoding matrix, a number of transmit antenna ports corresponding to the first codebook is 3, and an order of PSK modulation that is used by the first codebook is greater than or equal to 6.

With reference to the second aspect, in an implementation, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

*A* is a first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

With reference to the second aspect, in an implementation, each codeword in the second codebook W has a corresponding TPMI index.

With reference to the second aspect, in an implementation, each codeword in the codebook subset of the second codebook W has a corresponding TPMI index.

According to a third aspect, this application provides a communication apparatus. The communication apparatus may be a terminal device or a chip/circuit in the terminal device. The communication apparatus is configured to perform the method according to any one of the first aspect or the possible implementations of the first aspect. The communication apparatus includes a unit configured to perform the method according to any one of the first aspect or the possible implementations of the first aspect.

According to a fourth aspect, this application provides a communication apparatus. The communication apparatus may be a network device or a chip/circuit in the network device. The communication apparatus is configured to perform the method according to any one of the second aspect or the possible implementations of the second aspect. The communication apparatus includes a unit configured to perform the method according to any one of the second aspect or the possible implementations of the second aspect.

In the third aspect or the fourth aspect, the communication apparatus may include a receiving unit and a sending unit. For specific descriptions of the receiving unit and the sending unit, refer to the apparatus embodiments shown below. For beneficial effects of the third aspect and the fourth aspect, refer to related descriptions of the first aspect and the second aspect. Details are not described herein.

According to a fifth aspect, this application provides a communication apparatus. The communication apparatus may include a processor and an interface circuit, and the processor is connected to the interface circuit. The interface circuit is configured to exchange (or receive and send, or input and output) information or data, and the processor is configured to run program instructions, to enable the communication apparatus to perform the method according to any one of the first aspect, the second aspect, or the possible implementations of the first aspect or the second aspect. The interface circuit may be a communication interface or a transceiver. The transceiver may be a radio frequency module in the communication apparatus, a combination of a radio frequency module and an antenna, or an input/output interface of a chip or a circuit.

According to a sixth aspect, this application provides a readable storage medium. The readable storage medium stores program instructions. When the program instructions are run on a computer, the computer is enabled to perform the method according to any one of the first aspect, the second aspect, or the possible implementations of the first aspect or the second aspect.

According to a seventh aspect, this application provides a program product including program instructions. When the program product runs, the method according to any one of the first aspect, the second aspect, or the possible implementations of the first aspect or the second aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform the information exchange method according to any one of the first aspect, the second aspect, or the possible implementations of the first aspect or the second aspect. Optionally, the apparatus further includes the memory, and the memory is connected to the processor via a circuit. Optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a ninth aspect, this application provides a communication system. The communication system includes a network device and a terminal device. The terminal device is configured to perform the method according to any one of the first aspect or the possible implementations of the first aspect, and the network device is configured to perform the method according to any one of the second aspect or the possible implementations of the second aspect.

For technical effects achieved in the foregoing aspects, reference may be made to each other or reference may be made to beneficial effects in the method embodiments shown below. Details are not described herein again.

### BRIEF DESCRIPTION OF DRAWINGS

FIG. 1 is a schematic diagram of a network architecture of a communication system according to an embodiment of this application;
FIG. 2 is a schematic flowchart of a communication method according to an embodiment of this application;
FIG. 3 is a schematic diagram of a structure of a communication apparatus according to an embodiment of this application;
FIG. 4 is another schematic diagram of a structure of a communication apparatus according to an embodiment of this application; and
FIG. 5 is still another schematic diagram of a structure of a communication apparatus according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, unless otherwise specified, "/" means "or". For example, A/B may represent A or B. "And/or" in this specification describes only an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

It should be understood that terms "first", "second", and the like in the specification, the claims, and the accompanying drawings of this application are intended to distinguish between different objects, but are not intended to describe a specific order. In addition, terms "include", "have", and any variant thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this application means that a specific feature, structure, or characteristic described with reference to the embodiment may be included in at least one embodiment of this application. The phrase appearing in various locations in the specification does not necessarily mean a same embodiment, and neither means an independent or alternative embodiment mutually exclusive with another embodiment. It is explicitly and implicitly understood by a person skilled in the art that embodiments described in this application may be combined with another embodiment.

To better understand embodiments of this application, the following explains the terms or concepts used in embodiments.

### 1. Transmit antenna port

In this application, the transmit antenna port is a transmit antenna port (or referred to as an antenna port) of a terminal device. One or more physical antennas of the terminal device may form one logical antenna, and one port of the logical antenna corresponds to one transmit antenna port.

There may be one or more transmit antenna ports of the terminal device, for example, two transmit antenna ports, four transmit antenna ports, eight transmit antenna ports, 16 transmit antenna ports, or 32 transmit antenna ports.

This application is applicable to a terminal device that performs uplink data transmission by using three transmit antenna ports. A number of antenna ports of the terminal device may be greater than or equal to 3.

### 2. Number of uplink transmission layers

The number of uplink transmission layers is a number of streams of uplink data (or referred to as a number of spatial streams).

For spatial multiplexing, a maximum number of uplink transmission layers is a rank of a massive multiple-input multiple-output (massive multiple-input multiple-output, massive-MIMO) channel matrix, and the rank of the MIMO channel matrix is a number of diagonal elements (singular values) of a middle diagonal matrix obtained by performing transfer matrix singular value decomposition (singular value decomposition, SVD) on the MIMO channel matrix.

Usually, a maximum number of uplink transmission layers of a terminal device may be less than or equal to a number of transmit antenna ports of the terminal device, and an actual number of uplink transmission layers of the terminal device may be less than or equal to the maximum number of uplink transmission layers of the terminal device.

For example, if the maximum number of uplink transmission layers of the terminal device is equal to the number of transmit antenna ports of the terminal device, and the number of transmit antenna ports of the terminal device is 3, the maximum number of transmission layers corresponding to the number of transmit antenna ports of the terminal device is 3, and the number of uplink transmission layers of the terminal device may be any integer from 1 to 3.

### 3. Codebook and codeword

The codebook may include one or more codewords, and codewords in a same codebook correspond to a same number of transmit antenna ports and a same number of uplink transmission layers.

In this application, the codebook may also be referred to as an uplink codebook, and the codeword is also referred to as an uplink precoding matrix or a precoding matrix.

Table 1 shows an example of a part of uplink precoding in a current protocol specification.

**Table 1**

| Number of layers (number of layers) | Number of antennas (number of antennas) | Precoding matrix (precoding matrix) |
|---|---|---|
| 1 | 2 | 38.211 Table 6.3.1.5-1 |
| 1 | 4 | 38.211 Table 6.3.1.5-2 |
| 1 | 4 | 38.211 Table 6.3.1.5-3 |
| 2 | 2 | 38.211 Table 6.3.1.5-4 |
| 2 | 4 | 38.211 Table 6.3.1.5-5 |
| 3 | 4 | 38.211 Table 6.3.1.5-6 |
| 4 | 4 | 38.211 Table 6.3.1.5-7 |

The number of layers (number of layers) is a number of uplink transmission layers, and the number of antennas is a number of transmit antenna ports. A third column shows a standard number of a codebook corresponding to the number of uplink transmission layers and the number of transmit antenna ports.

For ease of understanding, the following Table 2-1 shows a codebook corresponding to a number of uplink transmission layers of 1 and a number of transmit antenna ports of 4, the codebook includes 28 codewords, and each codeword is in a one-to-one correspondence with a TPMI index; and the following Table 2-2 shows a codebook corresponding to a number of uplink transmission layers of 2 and a number of transmit antenna ports of 4, the codebook includes 22 codewords, and each codeword is in a one-to-one correspondence with a TPMI index.

**Table 2-1**

| TPMI index | W (ordered from left to right in increasing order of TPMI index) | | | | | | | |
|---|---|---|---|---|---|---|---|---|
| 0-7 | $\frac{1}{2} \left[\begin{matrix}1 \\ 0 \\ 0 \\ 0\end{matrix}\right]$ | $\frac{1}{2} \left[\begin{matrix}0 \\ 1 \\ 0 \\ 0\end{matrix}\right]$ | $\frac{1}{2} \left[\begin{matrix}0 \\ 0 \\ 1 \\ 0\end{matrix}\right]$ | $\frac{1}{2} \left[\begin{matrix}0 \\ 0 \\ 0 \\ 1\end{matrix}\right]$ | $\frac{1}{2} \left[\begin{matrix}1 \\ 0 \\ 1 \\ 0\end{matrix}\right]$ | $\frac{1}{2} \left[\begin{matrix}1 \\ 0 \\ - 1 \\ 0\end{matrix}\right]$ | $\frac{1}{2} \left[\begin{matrix}1 \\ 0 \\ j \\ 0\end{matrix}\right]$ | $\frac{1}{2} \left[\begin{matrix}1 \\ 0 \\ - j \\ 0\end{matrix}\right]$ |
| 8-15 | $\frac{1}{2} \left[\begin{matrix}0 \\ 1 \\ 0 \\ 1\end{matrix}\right]$ | $\frac{1}{2} \left[\begin{matrix}0 \\ 1 \\ 0 \\ - 1\end{matrix}\right]$ | $\frac{1}{2} \left[\begin{matrix}0 \\ 1 \\ 0 \\ j\end{matrix}\right]$ | $\frac{1}{2} \left[\begin{matrix}0 \\ 1 \\ 0 \\ - j\end{matrix}\right]$ | $\frac{1}{2} \left[\begin{matrix}1 \\ 1 \\ 1 \\ - 1\end{matrix}\right]$ | $\frac{1}{2} \left[\begin{matrix}1 \\ 1 \\ j \\ j\end{matrix}\right]$ | $\frac{1}{2} \left[\begin{matrix}1 \\ 1 \\ - 1 \\ 1\end{matrix}\right]$ | $\frac{1}{2} \left[\begin{matrix}1 \\ 1 \\ - j \\ - j\end{matrix}\right]$ |
| 16-23 | $\frac{1}{2} \left[\begin{matrix}1 \\ j \\ 1 \\ j\end{matrix}\right]$ | $\frac{1}{2} \left[\begin{matrix}1 \\ j \\ j \\ 1\end{matrix}\right]$ | $\frac{1}{2} \left[\begin{matrix}1 \\ j \\ - 1 \\ - j\end{matrix}\right]$ | $\frac{1}{2} \left[\begin{matrix}1 \\ j \\ - j \\ - 1\end{matrix}\right]$ | $\frac{1}{2} \left[\begin{matrix}1 \\ - 1 \\ 1 \\ 1\end{matrix}\right]$ | $\frac{1}{2} \left[\begin{matrix}1 \\ - 1 \\ j \\ - j\end{matrix}\right]$ | $\frac{1}{2} \left[\begin{matrix}1 \\ - 1 \\ - 1 \\ - 1\end{matrix}\right]$ | $\frac{1}{2} \left[\begin{matrix}1 \\ - 1 \\ - j \\ j\end{matrix}\right]$ |
| 24-27 | $\frac{1}{2} \left[\begin{matrix}1 \\ - j \\ 1 \\ - j\end{matrix}\right]$ | $\frac{1}{2} \left[\begin{matrix}1 \\ - j \\ j \\ - 1\end{matrix}\right]$ | $\frac{1}{2} \left[\begin{matrix}1 \\ - j \\ - 1 \\ j\end{matrix}\right]$ | $\frac{1}{2} \left[\begin{matrix}1 \\ - j \\ - j \\ 1\end{matrix}\right]$ | | | | |

**Table 2-2**

| TPMI index | W (ordered from left to right in increasing order of TPMI index) | | | | | | | |
|---|---|---|---|---|---|---|---|---|
| 0-7 | $\frac{1}{2} \left[\begin{matrix}1 \\ 0 \\ 0 \\ 0\end{matrix}\right]$ | $\frac{1}{2} \left[\begin{matrix}0 \\ 1 \\ 0 \\ 0\end{matrix}\right]$ | $\frac{1}{2} \left[\begin{matrix}0 \\ 0 \\ 1 \\ 0\end{matrix}\right]$ | $\frac{1}{2} \left[\begin{matrix}0 \\ 0 \\ 0 \\ 1\end{matrix}\right]$ | $\frac{1}{2} \left[\begin{matrix}1 \\ 0 \\ 1 \\ 0\end{matrix}\right]$ | $\frac{1}{2} \left[\begin{matrix}1 \\ 0 \\ - 1 \\ 0\end{matrix}\right]$ | $\frac{1}{2} \left[\begin{matrix}1 \\ 0 \\ j \\ 0\end{matrix}\right]$ | $\frac{1}{2} \left[\begin{matrix}1 \\ 0 \\ - j \\ 0\end{matrix}\right]$ |
| 8-15 | $\frac{1}{2} \left[\begin{matrix}0 \\ 1 \\ 0 \\ 1\end{matrix}\right]$ | $\frac{1}{2} \left[\begin{matrix}0 \\ 1 \\ 0 \\ - 1\end{matrix}\right]$ | $\frac{1}{2} \left[\begin{matrix}0 \\ 1 \\ 0 \\ j\end{matrix}\right]$ | $\frac{1}{2} \left[\begin{matrix}1 \\ 1 \\ 0 \\ - j\end{matrix}\right]$ | $\frac{1}{2} \left[\begin{matrix}1 \\ 1 \\ 1 \\ - 1\end{matrix}\right]$ | $\frac{1}{2} \left[\begin{matrix}1 \\ 1 \\ j \\ j\end{matrix}\right]$ | $\frac{1}{2} \left[\begin{matrix}1 \\ 1 \\ - 1 \\ 1\end{matrix}\right]$ | $\frac{1}{2} \left[\begin{matrix}1 \\ 1 \\ - j \\ - j\end{matrix}\right]$ |
| 16-23 | $\frac{1}{2} \left[\begin{matrix}1 \\ j \\ 1 \\ j\end{matrix}\right]$ | $\frac{1}{2} \left[\begin{matrix}1 \\ j \\ j \\ 1\end{matrix}\right]$ | $\frac{1}{2} \left[\begin{matrix}1 \\ j \\ - 1 \\ - j\end{matrix}\right]$ | $\frac{1}{2} \left[\begin{matrix}1 \\ j \\ - j \\ - 1\end{matrix}\right]$ | $\frac{1}{2} \left[\begin{matrix}1 \\ - 1 \\ 1 \\ 1\end{matrix}\right]$ | $\frac{1}{2} \left[\begin{matrix}1 \\ - 1 \\ j \\ - j\end{matrix}\right]$ | $\frac{1}{2} \left[\begin{matrix}1 \\ - 1 \\ - 1 \\ - 1\end{matrix}\right]$ | $\frac{1}{2} \left[\begin{matrix}1 \\ - 1 \\ - j \\ j\end{matrix}\right]$ |
| 24-27 | $\frac{1}{2} \left[\begin{matrix}1 \\ - j \\ 1 \\ - j\end{matrix}\right]$ | $\frac{1}{2} \left[\begin{matrix}1 \\ - j \\ j \\ - 1\end{matrix}\right]$ | $\frac{1}{2} \left[\begin{matrix}1 \\ - j \\ - 1 \\ j\end{matrix}\right]$ | $\frac{1}{2} \left[\begin{matrix}1 \\ - j \\ - j \\ 1\end{matrix}\right]$ | | | | |

For the matrices in Table 2-1 and Table 2-2, a number of rows is equal to a number of antenna ports, a number of columns is equal to a number of uplink transmission layers, each element code antenna port of a codeword represents a relative phase difference, and all the matrices are obtained through householder (householder) transformation. A physical meaning of each element in the codeword is that each element code antenna port of the codeword represents a relative phase difference. For example, if a codeword (codeword) is [1, j, 1, j], a physical meaning of the codeword is that phases of a first port and a third port are the same, phases of a second port and the third port are the same, and phase differences of the second port and the third port relative to the first port are +90 degrees.

Currently, a terminal device is usually limited by two Tx chains, which restricts UL throughput improvement. In an existing protocol, only uplink precoding configurations for numbers of transmit antenna ports of 1, 2, 4, and 8 are defined, and a precoding configuration under an uplink configuration of three antenna ports is not defined.

This application provides a communication method. According to the method, uplink precoding configuration of three antenna ports is implemented, so that a terminal device supports three Tx chains in a same frequency band, thereby significantly improving UL throughput. The same frequency band refers to a frequency band currently used by a terminal device with two Tx chains.

To better understand the communication method, the communication apparatus, and the communication system provided in this application, a network architecture used in embodiments of this application is described below.

For example, the communication system may be a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, or a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution-advanced (LTE-advanced, LTE-A) system, a 5th generation (the 5th generation, 5G) mobile communication system, a new radio (new radio, NR) system, a machine to machine (machine to machine, M2M) communication system, or another communication system evolved in the future. This is not limited in embodiments of this application. The technical solutions provided in embodiments of this application may be further applied to another communication system. An entity in the communication system may send control information and send (and/or receive) a transport block, and another entity in the communication system may receive the control information and receive (and/or send) the transport block.

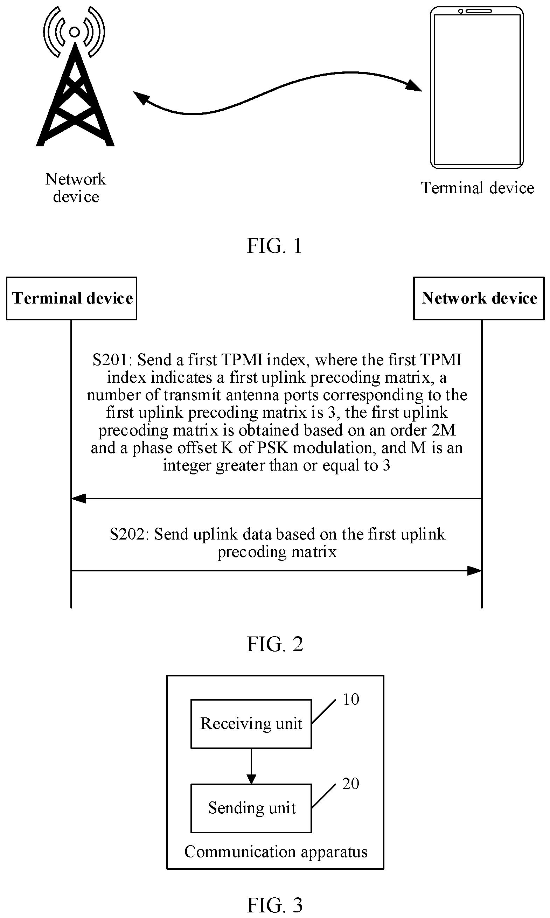

Refer to FIG. 1. FIG. 1 is a schematic diagram of a network architecture of a communication system according to an embodiment of this application.

As shown in FIG. 1, a network device and a terminal device form a communication system.

In this application, the network device may send a TPMI index to the terminal device. The TPMI index is used for an uplink precoding matrix, and a number of transmit antenna ports corresponding to the uplink precoding matrix is 3. The uplink precoding matrix may be obtained based on an order 2M and a phase offset K of PSK modulation, and M is an integer greater than or equal to 3. The terminal device may send uplink data to the network device based on the uplink precoding matrix.

Optionally, the network device may send downlink data to the terminal device.

The terminal device in embodiments of this application is a user-side entity configured to receive or transmit a signal, for example, user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, in embodiments of this application, the terminal device may alternatively be a terminal in an internet of things (internet of things, IoT) system. IoT is an important part of future development of the information technology, and a main technical feature of IoT is to connect a thing to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to a network device.

The network device in embodiments of this application is an entity configured to transmit or receive a signal, and may be a device configured to communicate with the terminal device. The network device may be a base transceiver station (base transceiver station, BTS) in a global system for mobile communications (global system for mobile communications, GSM) or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN, or the like. This is not limited in embodiments of this application.

The network device in embodiments of this application may be a device in a wireless network, for example, a radio access network (radio access network, RAN) node that connects a terminal device to the wireless network. Currently, some examples of the RAN node are a base station, a next generation base station gNB, a transmission reception point (transmission reception point, TRP), an evolved NodeB (evolved NodeB, eNB), a home base station, a baseband unit (baseband unit, BBU), and an access point (access point, AP) in a Wi-Fi system. In a network structure, the network device may include a central unit (centralized unit, CU) node, a distributed unit (distributed unit, DU) node, or a RAN device including a CU node and a DU node.

The terminal device and the network device each may include a radio resource control (radio resource control, RRC) signaling interaction module, a media access control (media access control, MAC) signaling interaction module, and a physical layer (physical layer, PHY) signaling and data interaction module. The RRC signaling interaction module is a module configured for a base station or UE to send and receive RRC signaling. The MAC signaling interaction module is a module configured for the base station or UE to send and receive media access control-control element (media access control-control element, MAC-CE) signaling. The PHY signaling and data interaction module is a module configured for the base station or UE to send and receive uplink/downlink control signaling and uplink/downlink data, and may be specifically configured to: send and receive downlink control signaling by using a physical downlink control channel (physical downlink control channel, PDCCH), send and receive uplink control signaling by using a physical uplink control channel (physical uplink control channel, PUCCH), send and receive downlink data by using a physical downlink shared channel (physical downlink shared channel, PDSCH), and send and receive uplink data by using a physical uplink shared channel (physical uplink shared channel, PUSCH).

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device or a network device, or a functional module that is in the terminal device or the network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

It should be noted that a number of terminal devices and a type of the terminal device in the network architecture shown in FIG. 1 are merely an example, and are not limited in embodiments of this application. For example, more or fewer terminal devices that communicate with the network device may be further included. For brief description, the terminal devices are not described one by one in the accompanying drawings. In addition, in the network architecture shown in FIG. 1, although the network device and the terminal device are shown, the application scenario may not be limited to including the network device and the terminal device, for example, may further include a core network node or a device configured to carry a virtualized network function. These are clear to a person skilled in the art. Details are not described herein again.

With reference to the network architecture, the following describes the communication method provided in embodiments of this application.

Refer to FIG. 2. FIG. 2 is a schematic flowchart of a communication method according to an embodiment of this application. In this embodiment of this application, a function performed by a terminal device may alternatively be performed by a module (for example, a chip) in the terminal device, and a function performed by a network device in this application may alternatively be performed by a module (for example, a chip) in the network device.

As shown in FIG. 2, the communication method may include the following steps.

Step S201: The network device sends a first TPMI index to the terminal device, where the first TPMI index indicates a first uplink precoding matrix, a number of transmit antenna ports corresponding to the first uplink precoding matrix is 3, the first uplink precoding matrix is obtained based on an order 2M and a phase offset K of PSK modulation, and M is an integer greater than or equal to 3.

Correspondingly, the terminal device receives the first TPMI index from the network device.

For example, the first TPMI index may be an integer, uniquely indicating an uplink precoding matrix. In this embodiment of this application, the uplink precoding matrix uniquely corresponding to the first TPMI index is referred to as the first uplink precoding matrix.

Table 3 is used as an example. The first TPMI index may be any integer from 0 to 97. For example, when the first TPMI index is 0, the first uplink precoding matrix is $\frac{1}{\sqrt{3}} ⋅ \left[\begin{matrix}1 \\ 0 \\ 0\end{matrix}\right]$ in a 2^{nd} row and a 2^{nd} column in Table 3. It should be understood that a value in Table 3 and an uplink precoding matrix corresponding to the value are merely examples. In another embodiment of this application, the value in Table 3 may alternatively correspond to another uplink precoding matrix, and the first TPMI index may alternatively be a value other than 0 to 97.

For example, the first uplink precoding matrix is a precoding matrix whose number of rows is 3 and whose number of columns is a number j of uplink transmission layers. For example, the number j of uplink transmission layers is 1, and the first uplink precoding matrix may be any codeword in the following Table 3.

Optionally, the first uplink precoding matrix is a product of a first coefficient and a first matrix, and at least one element of the first matrix is *e^{ik}, i* is an imaginary symbol, *k* is obtained based on M and K, the first coefficient is a positive number, and a value range of K is $\left(-\frac{π}{M},\frac{π}{M}\right)$.

In this application, the first coefficient may also be referred to as a normalization factor A. For details, refer to the following descriptions. The imaginary symbol *i* may alternatively be represented by j. In this application, to avoid confusion with the number j of uplink transmission layers, *i* is used to represent the imaginary symbol.

Optionally, the first coefficient may be related to the number of uplink transmission layers. For example, when the number of uplink transmission layers is 1, $A = \frac{1}{\sqrt{3}}$; when the number of uplink transmission layers is 2, $A = \frac{1}{\sqrt{2}} , \frac{1}{2} , \frac{1}{\sqrt{6}}$; when the number of uplink transmission layers is 3, $A = \frac{1}{\sqrt{3}} , \frac{1}{\sqrt{6}} , \frac{1}{3}$ ; and when the number of uplink transmission layers is 4, $A = \frac{1}{2} , \frac{1}{2 \sqrt{2}} , \frac{1}{2 \sqrt{3}}$.

For example, ${e}^{ik} = {e}^{i \left[\frac{\left(n-1\right) π}{M}+K\right]}$, and *n* is a positive integer not greater than 2M.

Optionally, the first uplink precoding matrix may include a zero element.

In a possible implementation, a first codebook includes the first uplink precoding matrix, a number of transmit antenna ports corresponding to the first codebook is 3, and an order of PSK modulation that is used by the first codebook is greater than or equal to 6. For example, the first codebook may include at least one codeword. For example, the first codebook may be shown in the following Table 3. Each codeword in the first codebook uniquely corresponds to one TPMI index.

Optionally, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

*A* is a first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

For example, the first codebook may include at least one codeword, and the second codebook may be shown in the following Table 3. Therefore, the first codebook may be some content in Table 3, and each codeword in the second codebook uniquely corresponds to one TPMI index.

For example, the first codebook is a codebook used for uplink transmission, the second codebook is W, and the first codebook may be W or a codebook subset of W.

In an implementation, each codeword in the second codebook W has a corresponding TPMI index. For example, when the second codebook is used for uplink transmission, each codeword in the second codebook W has a corresponding TPMI index.

In another implementation, each codeword in the codebook subset of the second codebook W has a corresponding TPMI index. For example, when the codebook subset is used for uplink transmission, the codebook subset has a corresponding TPMI index.

In a possible implementation, the network device first determines, based on a channel condition of an uplink channel of the terminal device, that the number of transmit antenna ports used by the terminal device is 3; further determines the first precoding matrix in the first codebook or the second codebook; and sends the TPMI index corresponding to the first precoding matrix to the terminal device.

The first codebook and the second codebook may be prestored in the network device and the terminal device, may be prestored in the network device and sent by the network device to the terminal device after the terminal device accesses a network, or may be prestored in the terminal device and sent by the terminal device to the network device after the terminal device accesses a network. This is not specifically limited in this embodiment of this application.

Step S202: The terminal device sends uplink data to the network device based on the first uplink precoding matrix.

Correspondingly, the network device receives the uplink data from the terminal device.

In some embodiments, the terminal device may precode the uplink data based on the first uplink precoding matrix, and further send the precoded uplink data to the network device. Specific content of the uplink data is not limited in this application.

For example, the following describes W in detail.

In a possible implementation, W may be represented by using the following formula: $W = \left[{W}_{1}, ⋯, {W}_{J}\right] = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

Wj represents a codebook (or referred to as a codeword set) corresponding to a case in which the number of transmit antenna ports is 3 and the number of uplink transmission layers is j. For example, *W*₁ is a codebook corresponding to a case in which the number of transmit antenna ports is 3 and the number of uplink transmission layers is 1.

*A* is a normalization factor. For example, a group of values of A may be as follows: When the number of uplink transmission layers is 1, $A = \frac{1}{\sqrt{3}}$; when the number of uplink transmission layers is 2, $A = \frac{1}{\sqrt{2}} , \frac{1}{2} , \frac{1}{\sqrt{6}}$; when the number of uplink transmission layers is 3, $A = \frac{1}{\sqrt{3}} , \frac{1}{\sqrt{6}} , \frac{1}{3}$; and when the number of uplink transmission layers is 4, $A = \frac{1}{2} , \frac{1}{2 \sqrt{2}} , \frac{1}{2 \sqrt{3}}$. A value of the normalization factor A is not limited in this application.

Elements in W may be represented by ***x**ᵢⱼ.* For example, ***x**ᵢⱼ* includes ***x***₁₁, ***x***₂₁, ***x***₃₁, and the like. ***x**ᵢⱼ* represents 0 or ${e}^{j \left[\frac{\left(n-1\right) π}{M}+K\right]}$. A value of *n* may be any integer from 1 to 2M, and 2M is the order of PSK modulation. For example, 2M may be 3.

*i* represents an antenna port subscript. For example, *i*=1, 2, 3, that is, *i* may be one of 1, 2, and 3. *j* represents the number of uplink transmission layers, and *j* = 1,2, ...,J. *J* is the maximum number of uplink transmission layers. For example, a value of *J* is 8. K is the phase offset, and a value range of K may be $\left(-\frac{π}{M},\frac{π}{M}\right)$. In other words, a meaning of ***x**ᵢⱼ* is a precoding matrix corresponding to an antenna port subscript of *i* and a number of uplink transmission layers of j.

It should be understood that ***x**ᵢⱼ* in W cannot all be 0s, and at least one element in each column (layer) of W is not 0 (that is, at least one of elements corresponding to a same number of uplink transmission layers is not 0). A value of ***x***_{*i*1} is 0 or *e^{ik},* ${e}^{ik} = {e}^{i \left[\frac{\left(n-1\right) π}{M}+K\right]}$, and *i* in *e^{ik}* is an imaginary symbol. It should be noted that the imaginary symbol *i* may alternatively be represented by *j*. In this embodiment of this application, to avoid confusion with the number of uplink transmission layers, *i* is used to represent the imaginary symbol.

Optionally, each codeword of W uniquely corresponds to a TPMI index.

Table 3 shows an example of W corresponding to *K* = 0, M = 3, and *J* = 1. The group of precoding matrices (precoding matrix) are shown in Table 3. In Table 3, the imaginary symbol may alternatively be represented by *j*.

**Table 3**

| TPMI index | W | | | | | | |
|---|---|---|---|---|---|---|---|
| 0-6 | $\frac{1}{\sqrt{3}} ⋅ \left[\begin{matrix}1 \\ 0 \\ 0\end{matrix}\right]$ | $\frac{1}{\sqrt{3}} ⋅ \left[\begin{matrix}1 \\ 0 \\ {e}^{j \frac{π}{3}}\end{matrix}\right]$ | $\frac{1}{\sqrt{3}} ⋅ \left[\begin{matrix}1 \\ 0 \\ {e}^{j \frac{2 π}{3}}\end{matrix}\right]$ | $\frac{1}{\sqrt{3}} ⋅ \left[\begin{matrix}1 \\ 0 \\ - 1\end{matrix}\right]$ | $\frac{1}{\sqrt{3}} ⋅ \left[\begin{matrix}1 \\ 0 \\ {e}^{j \frac{4 π}{3}}\end{matrix}\right]$ | $\frac{1}{\sqrt{3}} ⋅ \left[\begin{matrix}1 \\ 0 \\ {e}^{j \frac{5 π}{3}}\end{matrix}\right]$ | $\frac{1}{\sqrt{3}} ⋅ \left[\begin{matrix}1 \\ 0 \\ 1\end{matrix}\right]$ |
| 7-13 | $\frac{1}{\sqrt{3}} ⋅ \left[\begin{matrix}1 \\ {e}^{j \frac{π}{3}} \\ 0\end{matrix}\right]$ | $\frac{1}{\sqrt{3}} ⋅ \left[\begin{matrix}1 \\ {e}^{j \frac{π}{3}} \\ {e}^{j \frac{π}{3}}\end{matrix}\right]$ | $\frac{1}{\sqrt{3}} ⋅ \left[\begin{matrix}1 \\ {e}^{j \frac{π}{3}} \\ {e}^{j \frac{2 π}{3}}\end{matrix}\right]$ | $\frac{1}{\sqrt{3}} ⋅ \left[\begin{matrix}1 \\ {e}^{j \frac{π}{3}} \\ - 1\end{matrix}\right]$ | $\frac{1}{\sqrt{3}} ⋅ \left[\begin{matrix}1 \\ {e}^{j \frac{π}{3}} \\ {e}^{j \frac{4 π}{3}}\end{matrix}\right]$ | $\frac{1}{\sqrt{3}} ⋅ \left[\begin{matrix}0 \\ {e}^{j \frac{π}{3}} \\ {e}^{j \frac{5 π}{3}}\end{matrix}\right]$ | $\frac{1}{\sqrt{3}} ⋅ \left[\begin{matrix}1 \\ {e}^{j \frac{π}{3}} \\ 1\end{matrix}\right]$ |
| 14-20 | $\frac{1}{\sqrt{3}} ⋅ \left[\begin{matrix}1 \\ {e}^{j \frac{2 π}{3}} \\ 0\end{matrix}\right]$ | $\frac{1}{\sqrt{3}} ⋅ \left[\begin{matrix}1 \\ {e}^{j \frac{2 π}{3}} \\ {e}^{j \frac{π}{3}}\end{matrix}\right]$ | $\frac{1}{\sqrt{3}} ⋅ \left[\begin{matrix}0 \\ {e}^{j \frac{2 π}{3}} \\ {e}^{j \frac{2 π}{3}}\end{matrix}\right]$ | $\frac{1}{\sqrt{3}} ⋅ \left[\begin{matrix}1 \\ {e}^{j \frac{2 π}{3}} \\ - 1\end{matrix}\right]$ | $\frac{1}{\sqrt{3}} ⋅ \left[\begin{matrix}1 \\ {e}^{j \frac{2 π}{3}} \\ {e}^{j \frac{4 π}{3}}\end{matrix}\right]$ | $\frac{1}{\sqrt{3}} ⋅ \left[\begin{matrix}1 \\ {e}^{j \frac{2 π}{3}} \\ {e}^{j \frac{5 π}{3}}\end{matrix}\right]$ | $\frac{1}{\sqrt{3}} ⋅ \left[\begin{matrix}1 \\ {e}^{j \frac{2 π}{3}} \\ 1\end{matrix}\right]$ |
| 21-27 | $\frac{1}{\sqrt{3}} ⋅ \left[\begin{matrix}1 \\ - 1 \\ 0\end{matrix}\right]$ | $\frac{1}{\sqrt{3}} ⋅ \left[\begin{matrix}1 \\ - 1 \\ {e}^{j \frac{π}{3}}\end{matrix}\right]$ | $\frac{1}{\sqrt{3}} ⋅ \left[\begin{matrix}1 \\ - 1 \\ {e}^{j \frac{2 π}{3}}\end{matrix}\right]$ | $\frac{1}{\sqrt{3}} ⋅ \left[\begin{matrix}1 \\ - 1 \\ - 1\end{matrix}\right]$ | $\frac{1}{\sqrt{3}} ⋅ \left[\begin{matrix}0 \\ - 1 \\ {e}^{j \frac{4 π}{3}}\end{matrix}\right]$ | $\frac{1}{\sqrt{3}} ⋅ \left[\begin{matrix}1 \\ - 1 \\ {e}^{j \frac{5 π}{3}}\end{matrix}\right]$ | $\frac{1}{\sqrt{3}} ⋅ \left[\begin{matrix}1 \\ - 1 \\ 1\end{matrix}\right]$ |
| 28-34 | $\frac{1}{\sqrt{3}} ⋅ \left[\begin{matrix}1 \\ {e}^{j \frac{4 π}{3}} \\ 0\end{matrix}\right]$ | $\frac{1}{\sqrt{3}} ⋅ \left[\begin{matrix}1 \\ {e}^{j \frac{4 π}{3}} \\ {e}^{j \frac{π}{3}}\end{matrix}\right]$ | $\frac{1}{\sqrt{3}} ⋅ \left[\begin{matrix}1 \\ {e}^{j \frac{4 π}{3}} \\ {e}^{j \frac{2 π}{3}}\end{matrix}\right]$ | $\frac{1}{\sqrt{3}} ⋅ \left[\begin{matrix}1 \\ {e}^{j \frac{4 π}{3}} \\ - 1\end{matrix}\right]$ | $\frac{1}{\sqrt{3}} ⋅ \left[\begin{matrix}1 \\ {e}^{j \frac{4 π}{3}} \\ {e}^{j \frac{4 π}{3}}\end{matrix}\right]$ | $\frac{1}{\sqrt{3}} ⋅ \left[\begin{matrix}0 \\ {e}^{j \frac{4 π}{3}} \\ {e}^{j \frac{5 π}{3}}\end{matrix}\right]$ | $\frac{1}{\sqrt{3}} ⋅ \left[\begin{matrix}1 \\ {e}^{j \frac{4 π}{3}} \\ 1\end{matrix}\right]$ |
| 35-41 | $\frac{1}{\sqrt{3}} ⋅ \left[\begin{matrix}1 \\ {e}^{j \frac{5 π}{3}} \\ 0\end{matrix}\right]$ | $\frac{1}{\sqrt{3}} ⋅ \left[\begin{matrix}1 \\ {e}^{j \frac{5 π}{3}} \\ {e}^{j \frac{π}{3}}\end{matrix}\right]$ | $\frac{1}{\sqrt{3}} ⋅ \left[\begin{matrix}0 \\ {e}^{j \frac{5 π}{3}} \\ {e}^{j \frac{2 π}{3}}\end{matrix}\right]$ | $\frac{1}{\sqrt{3}} ⋅ \left[\begin{matrix}1 \\ {e}^{j \frac{5 π}{3}} \\ - 1\end{matrix}\right]$ | $\frac{1}{\sqrt{3}} ⋅ \left[\begin{matrix}1 \\ {e}^{j \frac{5 π}{3}} \\ {e}^{j \frac{4 π}{3}}\end{matrix}\right]$ | $\frac{1}{\sqrt{3}} ⋅ \left[\begin{matrix}1 \\ {e}^{j \frac{2 π}{3}} \\ {e}^{j \frac{5 π}{3}}\end{matrix}\right]$ | $\frac{1}{\sqrt{3}} ⋅ \left[\begin{matrix}1 \\ {e}^{j \frac{5 π}{3}} \\ 1\end{matrix}\right]$ |
| 42-48 | $\frac{1}{\sqrt{3}} ⋅ \left[\begin{matrix}1 \\ 1 \\ 0\end{matrix}\right]$ | $\frac{1}{\sqrt{3}} ⋅ \left[\begin{matrix}1 \\ 1 \\ {e}^{j \frac{π}{3}}\end{matrix}\right]$ | $\frac{1}{\sqrt{3}} ⋅ \left[\begin{matrix}1 \\ 1 \\ {e}^{j \frac{2 π}{3}}\end{matrix}\right]$ | $\frac{1}{\sqrt{3}} ⋅ \left[\begin{matrix}1 \\ 1 \\ - 1\end{matrix}\right]$ | $\frac{1}{\sqrt{3}} ⋅ \left[\begin{matrix}1 \\ 1 \\ {e}^{j \frac{4 π}{3}}\end{matrix}\right]$ | $\frac{1}{\sqrt{3}} ⋅ \left[\begin{matrix}1 \\ 1 \\ {e}^{j \frac{5 π}{3}}\end{matrix}\right]$ | $\frac{1}{\sqrt{3}} ⋅ \left[\begin{matrix}1 \\ 1 \\ 1\end{matrix}\right]$ |
| 49-55 | $\frac{1}{\sqrt{3}} ⋅ \left[\begin{matrix}0 \\ 0 \\ 0\end{matrix}\right]$ | $\frac{1}{\sqrt{3}} ⋅ \left[\begin{matrix}0 \\ 0 \\ {e}^{j \frac{π}{3}}\end{matrix}\right]$ | $\frac{1}{\sqrt{3}} ⋅ \left[\begin{matrix}0 \\ 0 \\ {e}^{j \frac{2 π}{3}}\end{matrix}\right]$ | $\frac{1}{\sqrt{3}} ⋅ \left[\begin{matrix}0 \\ 0 \\ - 1\end{matrix}\right]$ | $\frac{1}{\sqrt{3}} ⋅ \left[\begin{matrix}0 \\ 0 \\ {e}^{j \frac{4 π}{3}}\end{matrix}\right]$ | $\frac{1}{\sqrt{3}} ⋅ \left[\begin{matrix}0 \\ 0 \\ {e}^{j \frac{5 π}{3}}\end{matrix}\right]$ | $\frac{1}{\sqrt{3}} ⋅ \left[\begin{matrix}0 \\ 0 \\ 1\end{matrix}\right]$ |
| 56-62 | $\frac{1}{\sqrt{3}} ⋅ \left[\begin{matrix}0 \\ {e}^{j \frac{π}{3}} \\ 0\end{matrix}\right]$ | $\frac{1}{\sqrt{3}} ⋅ \left[\begin{matrix}0 \\ {e}^{j \frac{π}{3}} \\ {e}^{j \frac{π}{3}}\end{matrix}\right]$ | $\frac{1}{\sqrt{3}} ⋅ \left[\begin{matrix}0 \\ {e}^{j \frac{π}{3}} \\ {e}^{j \frac{2 π}{3}}\end{matrix}\right]$ | $\frac{1}{\sqrt{3}} ⋅ \left[\begin{matrix}0 \\ {e}^{j \frac{π}{3}} \\ - 1\end{matrix}\right]$ | $\frac{1}{\sqrt{3}} ⋅ \left[\begin{matrix}0 \\ {e}^{j \frac{π}{3}} \\ {e}^{j \frac{4 π}{3}}\end{matrix}\right]$ | $\frac{1}{\sqrt{3}} ⋅ \left[\begin{matrix}0 \\ {e}^{j \frac{π}{3}} \\ {e}^{j \frac{5 π}{3}}\end{matrix}\right]$ | $\frac{1}{\sqrt{3}} ⋅ \left[\begin{matrix}0 \\ {e}^{j \frac{π}{3}} \\ 1\end{matrix}\right]$ |
| 63-69 | $\frac{1}{\sqrt{3}} ⋅ \left[\begin{matrix}0 \\ {e}^{j \frac{2 π}{3}} \\ 0\end{matrix}\right]$ | $\frac{1}{\sqrt{3}} ⋅ \left[\begin{matrix}0 \\ {e}^{j \frac{2 π}{3}} \\ {e}^{j \frac{π}{3}}\end{matrix}\right]$ | $\frac{1}{\sqrt{3}} ⋅ \left[\begin{matrix}0 \\ {e}^{j \frac{2 π}{3}} \\ {e}^{j \frac{2 π}{3}}\end{matrix}\right]$ | $\frac{1}{\sqrt{3}} ⋅ \left[\begin{matrix}0 \\ {e}^{j \frac{2 π}{3}} \\ - 1\end{matrix}\right]$ | $\frac{1}{\sqrt{3}} ⋅ \left[\begin{matrix}1 \\ {e}^{j \frac{2 π}{3}} \\ {e}^{j \frac{4 π}{3}}\end{matrix}\right]$ | $\frac{1}{\sqrt{3}} ⋅ \left[\begin{matrix}0 \\ {e}^{j \frac{2 π}{3}} \\ {e}^{j \frac{5 π}{3}}\end{matrix}\right]$ | $\frac{1}{\sqrt{3}} ⋅ \left[\begin{matrix}0 \\ {e}^{j \frac{2 π}{3}} \\ 1\end{matrix}\right]$ |
| 70-76 | $\frac{1}{\sqrt{3}} ⋅ \left[\begin{matrix}0 \\ - 1 \\ 0\end{matrix}\right]$ | $\frac{1}{\sqrt{3}} ⋅ \left[\begin{matrix}0 \\ - 1 \\ {e}^{j \frac{π}{3}}\end{matrix}\right]$ | $\frac{1}{\sqrt{3}} ⋅ \left[\begin{matrix}0 \\ - 1 \\ {e}^{j \frac{2 π}{3}}\end{matrix}\right]$ | $\frac{1}{\sqrt{3}} ⋅ \left[\begin{matrix}1 \\ - 1 \\ - 1\end{matrix}\right]$ | $\frac{1}{\sqrt{3}} ⋅ \left[\begin{matrix}0 \\ - 1 \\ {e}^{j \frac{4 π}{3}}\end{matrix}\right]$ | $\frac{1}{\sqrt{3}} ⋅ \left[\begin{matrix}0 \\ - 1 \\ {e}^{j \frac{5 π}{3}}\end{matrix}\right]$ | $\frac{1}{\sqrt{3}} ⋅ \left[\begin{matrix}0 \\ - 1 \\ 1\end{matrix}\right]$ |
| 77-83 | $\frac{1}{\sqrt{3}} ⋅ \left[\begin{matrix}0 \\ {e}^{j \frac{4 π}{3}} \\ 0\end{matrix}\right]$ | $\frac{1}{\sqrt{3}} ⋅ \left[\begin{matrix}1 \\ {e}^{j \frac{4 π}{3}} \\ {e}^{j \frac{π}{3}}\end{matrix}\right]$ | $\frac{1}{\sqrt{3}} ⋅ \left[\begin{matrix}0 \\ {e}^{j \frac{4 π}{3}} \\ {e}^{j \frac{2 π}{3}}\end{matrix}\right]$ | $\frac{1}{\sqrt{3}} ⋅ \left[\begin{matrix}0 \\ {e}^{j \frac{4 π}{3}} \\ - 1\end{matrix}\right]$ | $\frac{1}{\sqrt{3}} ⋅ \left[\begin{matrix}0 \\ {e}^{j \frac{4 π}{3}} \\ {e}^{j \frac{4 π}{3}}\end{matrix}\right]$ | $\frac{1}{\sqrt{3}} ⋅ \left[\begin{matrix}0 \\ {e}^{j \frac{4 π}{3}} \\ {e}^{j \frac{5 π}{3}}\end{matrix}\right]$ | $\frac{1}{\sqrt{3}} ⋅ \left[\begin{matrix}0 \\ {e}^{j \frac{4 π}{3}} \\ 1\end{matrix}\right]$ |
| 84-90 | $\frac{1}{\sqrt{3}} ⋅ \left[\begin{matrix}0 \\ {e}^{j \frac{5 π}{3}} \\ 0\end{matrix}\right]$ | $\frac{1}{\sqrt{3}} ⋅ \left[\begin{matrix}1 \\ {e}^{j \frac{5 π}{3}} \\ {e}^{j \frac{π}{3}}\end{matrix}\right]$ | $\frac{1}{\sqrt{3}} ⋅ \left[\begin{matrix}0 \\ {e}^{j \frac{5 π}{3}} \\ {e}^{j \frac{2 π}{3}}\end{matrix}\right]$ | $\frac{1}{\sqrt{3}} ⋅ \left[\begin{matrix}0 \\ {e}^{j \frac{5 π}{3}} \\ - 1\end{matrix}\right]$ | $\frac{1}{\sqrt{3}} ⋅ \left[\begin{matrix}1 \\ {e}^{j \frac{5 π}{3}} \\ {e}^{j \frac{4 π}{3}}\end{matrix}\right]$ | $\frac{1}{\sqrt{3}} ⋅ \left[\begin{matrix}0 \\ {e}^{j \frac{5 π}{3}} \\ {e}^{j \frac{5 π}{3}}\end{matrix}\right]$ | $\frac{1}{\sqrt{3}} ⋅ \left[\begin{matrix}0 \\ {e}^{j \frac{5 π}{3}} \\ 1\end{matrix}\right]$ |
| 91-97 | $\frac{1}{\sqrt{3}} ⋅ \left[\begin{matrix}0 \\ 1 \\ 0\end{matrix}\right]$ | $\frac{1}{\sqrt{3}} ⋅ \left[\begin{matrix}0 \\ 1 \\ {e}^{j \frac{π}{3}}\end{matrix}\right]$ | $\frac{1}{\sqrt{3}} ⋅ \left[\begin{matrix}0 \\ 1 \\ {e}^{j \frac{2 π}{3}}\end{matrix}\right]$ | $\frac{1}{\sqrt{3}} ⋅ \left[\begin{matrix}0 \\ 1 \\ - 1\end{matrix}\right]$ | $\frac{1}{\sqrt{3}} ⋅ \left[\begin{matrix}0 \\ 1 \\ {e}^{j \frac{4 π}{3}}\end{matrix}\right]$ | $\frac{1}{\sqrt{3}} ⋅ \left[\begin{matrix}0 \\ 1 \\ {e}^{j \frac{5 π}{3}}\end{matrix}\right]$ | $\frac{1}{\sqrt{3}} ⋅ \left[\begin{matrix}0 \\ 1 \\ 1\end{matrix}\right]$ |

It should be noted that, Table 3 shows merely an example of some precoding matrices provided in this embodiment of this application. W corresponding to *K* = 0, M = 3, and *J* = 1 may further include another precoding matrix, or W corresponding to *K* = 0, M = 3, and *J* = 1 may include only the precoding matrices in Table 3. This is not limited in this application.

Table 4-1, Table 4-2, Table 4-3, and Table 4-4 show examples of non-coherent codebooks W corresponding to three antenna ports. Table 4-1 shows W corresponding to three antenna ports and J=1. W corresponding to three antenna ports and J=2 may be shown in Table 4-2 or Table 4-3. Table 4-4 shows W corresponding to three antenna ports and J=3. For example, a value of A in this embodiment of this application is $\frac{1}{\sqrt{3}}$ or 1.

**Table 4-1**

| TPMI index | W | | |
|---|---|---|---|
| 0-2 | $\left[\begin{matrix}1 \\ 0 \\ 0\end{matrix}\right]$ | $\left[\begin{matrix}0 \\ 1 \\ 0\end{matrix}\right]$ | $\left[\begin{matrix}0 \\ 0 \\ 1\end{matrix}\right]$ |

**Table 4-2**

| TPMI index | W | | |
|---|---|---|---|
| 0-2 | $\left[\begin{matrix}1 & 0 \\ 0 & 1 \\ 0 & 0\end{matrix}\right]$ | $\left[\begin{matrix}0 & 0 \\ 1 & 0 \\ 0 & 1\end{matrix}\right]$ | $\left[\begin{matrix}0 & 1 \\ 0 & 0 \\ 1 & 0\end{matrix}\right]$ |

**Table 4-3**

| **TPMI index** | **W** | | |
|---|---|---|---|
| 0-2 | $\left[\begin{matrix}1 & 0 \\ 0 & 0 \\ 0 & 1\end{matrix}\right]$ | $\left[\begin{matrix}0 & 1 \\ 1 & 0 \\ 0 & 0\end{matrix}\right]$ | $\left[\begin{matrix}0 & 0 \\ 0 & 1 \\ 1 & 0\end{matrix}\right]$ |

**Table 4-4**

| TPMI index | W |
|---|---|
| 0 | $\left[\begin{matrix}1 & 0 & 0 \\ 0 & 1 & 0 \\ 0 & 0 & 1\end{matrix}\right]$ |

It should be noted that, Table 4-2 and Table 4-3 may show examples of some precoding matrices provided in this embodiment of this application. This is not limited in this application.

The foregoing content describes in detail the method provided in this application. To facilitate implementation of the foregoing solutions in embodiments of this application, embodiments of this application further provide corresponding apparatuses or devices.

In this application, the network device and the terminal device are divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely logical function division. During actual implementation, another division manner may be used. The following describes in detail communication apparatuses in embodiments of this application with reference to FIG. 3 to FIG 5.

Refer to FIG. 3. FIG. 3 is a schematic diagram of a structure of a communication apparatus according to an embodiment of this application. As shown in FIG. 3, the communication apparatus may include a receiving unit 10 and a sending unit 20.

In some embodiments of this application, the communication apparatus may be the terminal device shown above, or a chip or a circuit disposed in the terminal device. In other words, the communication apparatus may be configured to perform the steps, functions, or the like performed by the terminal device in the foregoing method embodiment.

In a design, the receiving unit 10 is configured to receive a first TPMI index, where the first TPMI index indicates a first uplink precoding matrix, a number of transmit antenna ports corresponding to the first uplink precoding matrix is 3, the first uplink precoding matrix is obtained based on an order 2M and a phase offset K of PSK modulation, and M is an integer greater than or equal to 3.

The sending unit 20 is configured to send uplink data based on the first uplink precoding matrix.

In an implementation, the first uplink precoding matrix is a precoding matrix whose number of rows is 3 and whose number of columns is a number of uplink transmission layers.

In an implementation, the first uplink precoding matrix is a product of a first coefficient and a first matrix, and at least one element of the first matrix is *e^{ik}, i* is an imaginary symbol, *k* is obtained based on M and K, the first coefficient is a positive number, and a value range of K is $\left(-\frac{π}{M},\frac{π}{M}\right)$.

In an implementation, ${e}^{ik} = {e}^{i \left[\frac{\left(n-1\right) π}{M}+K\right]}$, and *n* is a positive integer not greater than 2M.

For example, the first uplink precoding matrix includes a zero element.

In an implementation, a first codebook includes the first uplink precoding matrix, a number of transmit antenna ports corresponding to the first codebook is 3, and an order of PSK modulation that is used by the first codebook is greater than or equal to 6.

For example, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

*A* is a first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}$ is a non-zero element, *n* is a positive integer not greater than 2M, and a value range of K is $\left(-\frac{π}{M},\frac{π}{M}\right)$.

For example, each codeword in the second codebook W has a corresponding TPMI index.

For example, each codeword in the codebook subset of the second codebook W has a corresponding TPMI index.

In this embodiment of this application, for descriptions of the first TPMI index, the first uplink precoding matrix, the first codebook, the second codebook, and the like, reference may be made to the descriptions in the method embodiment shown in FIG. 2, and details are not described herein again.

It may be understood that, specific descriptions of the receiving unit 10 and the sending unit 20 shown in this embodiment of this application are merely examples. For specific functions of the receiving unit 10 and the sending unit 20, steps performed by the receiving unit 10 and the sending unit 20, or the like, refer to the method embodiment shown in FIG. 2. Details are not described herein again. In addition, for technical effects of this embodiment of this application, reference may be made to the technical effects of the method embodiment shown in FIG. 2. For brevity, details are not described herein again.

FIG. 3 is reused. In some other embodiments of this application, the communication apparatus may be the network device shown above, or a chip or a circuit disposed in the network device. In other words, the communication apparatus may be configured to perform the steps, functions, or the like performed by the network device in the foregoing method embodiment.

In a design, the sending unit 20 is configured to send a first TPMI index, where the first TPMI index indicates a first uplink precoding matrix, a number of transmit antenna ports corresponding to the first uplink precoding matrix is 3, the first uplink precoding matrix is obtained based on an order 2M and a phase offset K of PSK modulation, M is an integer greater than or equal to 3, and the first uplink precoding matrix is used to send uplink data.

In an implementation, the receiving unit 10 is configured to receive uplink data, where the uplink data is sent based on the first uplink precoding matrix.

In an implementation, the first uplink precoding matrix is a precoding matrix whose number of rows is 3 and whose number of columns is a number of uplink transmission layers.

In an implementation, the first uplink precoding matrix is a product of a first coefficient and a first matrix, and at least one element of the first matrix is *e^{ik}, i* is an imaginary symbol, *k* is obtained based on M and K, the first coefficient is a positive number, and a value range of K is $\left(-\frac{π}{M},\frac{π}{M}\right)$.

In an implementation, ${e}^{ik} = {e}^{i \left[\frac{\left(n-1\right) π}{M}+K\right]}$, and *n* is a positive integer not greater than 2M.

For example, the first uplink precoding matrix includes a zero element.

For example, a first codebook includes the first uplink precoding matrix, a number of transmit antenna ports corresponding to the first codebook is 3, and an order of PSK modulation that is used by the first codebook is greater than or equal to 6.

For example, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$

*A* is a first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

For example, each codeword in the second codebook W has a corresponding TPMI index.

For example, each codeword in the codebook subset of the second codebook W has a corresponding TPMI index.

It may be understood that, specific descriptions of the receiving unit 10 and the sending unit 20 shown in this embodiment of this application are merely examples. For specific functions of the receiving unit 10 and the sending unit 20, steps performed by the receiving unit 10 and the sending unit 20, or the like, refer to the method embodiment shown in FIG. 2. Details are not described herein again. In addition, for technical effects of this embodiment of this application, reference may be made to the technical effects of the method embodiment shown in FIG. 2. For brevity, details are not described herein again.

The network device and the terminal device in embodiments of this application are described above, and possible product forms of the network device and the terminal device are described below. It should be understood that any form of product having a function of the network device or the terminal device in FIG. 3 falls within the protection scope of embodiments of this application. It should be further understood that the following descriptions are merely examples, and a product form of a communication apparatus in embodiments of this application is not limited thereto.

In a possible implementation, the communication apparatus shown in FIG. 3 may further include a processing unit. The processing unit may be one or more processors. The sending unit 20 and the receiving unit 10 are integrated into one device, for example, a transceiver; or the sending unit 20 may be a transmitter, and the receiving unit 10 may be a receiver. In embodiments of this application, the processor and the transceiver may be coupled. A connection manner between the processor and the transceiver is not limited in embodiments of this application. In a process of performing the foregoing method, a process related to sending information in the method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process related to receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

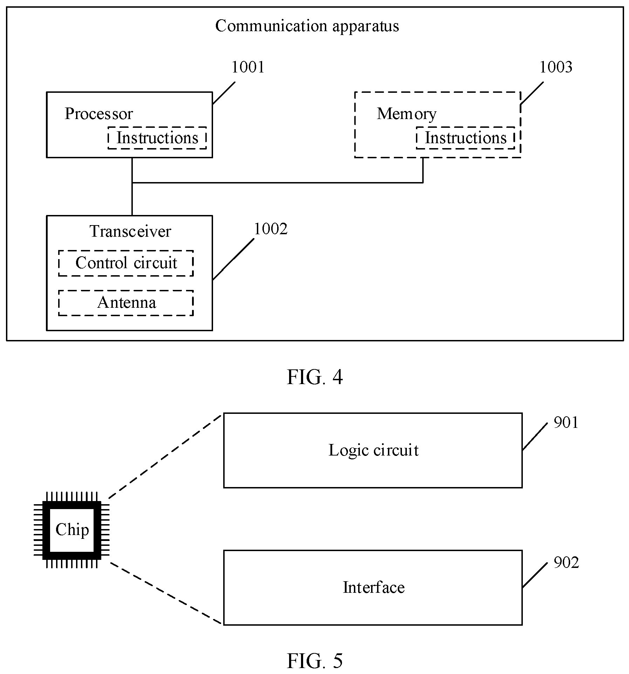

Refer to FIG. 4. FIG. 4 is another schematic diagram of a structure of a communication apparatus according to an embodiment of this application. As shown in FIG. 4, the communication apparatus provided in this embodiment of this application may be configured to implement the method described in the method embodiment. For details, refer to the descriptions in the method embodiment. The communication apparatus may be a network device or a terminal device, or a chip thereof. For example, the communication apparatus includes one or more processors 1001 and a transceiver 1002. The communication apparatus may further include a memory 1003. In an implementation, the communication apparatus further includes an input/output apparatus (not shown in FIG. 4).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

For example, when the communication apparatus is configured to perform the step, method, or function performed by the network device in the embodiment shown in FIG. 2, the transceiver 1002 may be configured to perform step S201 in FIG. 2, and/or perform another process of the technology described in this specification.

For example, when the communication apparatus is configured to perform the step, method, or function performed by the terminal device in the embodiment shown in FIG. 2, the transceiver 1002 may be configured to perform step S202 in FIG. 2, and/or perform another process of the technology described in this specification.

In any one of the foregoing implementations, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions. The instructions may be a computer program. The computer program is run on the processor 1001, so that the communication apparatus is enabled to perform the method described in the method embodiment. The computer program may be fixed in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal-oxide-semiconductor (complementary metal oxide semiconductor, CMOS), an N-type metal-oxide-semiconductor (nMetal-oxide-semiconductor, NMOS), a P-channel metal-oxide-semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those shown in FIG. 4. This is not limited in this embodiment of this application. The method performed by the processor and the transceiver shown above is merely an example. For steps specifically performed by the processor and the transceiver, refer to the descriptions of the method embodiment.

In another possible implementation, the communication apparatus shown in FIG. 4 may further include a processing unit. The processing unit may be one or more logical circuits. The sending unit 20 and the receiving unit 10 may be input/output interfaces, which are also referred to as communication interfaces, interface circuits, interfaces, or the like. Alternatively, the sending unit 20 and the receiving unit 10 may be a sending unit and a receiving unit, the sending unit may be an output interface, the receiving unit may be an input interface, and the sending unit and the receiving unit are integrated into one unit, for example, an input/output interface.

Refer to FIG. 5. FIG. 5 is still another schematic diagram of a structure of a communication apparatus according to an embodiment of this application. As shown in FIG. 5, the communication apparatus shown in FIG. 5 includes a logic circuit 901 and an interface 902. In other words, the processing unit may be implemented by using the logic circuit 901, and the sending unit 20 and the receiving unit 10 may be implemented by using the interface 902. The logic circuit 901 may be a chip, a processing circuit, an integrated circuit, a system on chip (system on chip, SoC) chip, or the like, and the interface 902 may be a communication interface, an input/output interface, a pin, or the like. For example, FIG. 5 is shown by using an example in which the communication apparatus is a chip. The chip includes the logic circuit 901 and the interface 902.

In this embodiment of this application, the logic circuit and the interface may alternatively be coupled to each other. A specific manner of connection between the logic circuit and the interface is not limited in this embodiment of this application.

For example, when the communication apparatus is configured to perform the step, method, or function performed by the network device in the method embodiment shown in FIG. 2, the logic circuit 901 is configured to determine a first TPMI index, and the interface 902 is configured to send the first TPMI index.

For example, when the communication apparatus is configured to perform the step, method, or function performed by the terminal device in the method embodiment shown in FIG. 2, the logic circuit 901 is configured to determine uplink data, and the interface 902 is configured to send the uplink data.

In this embodiment of this application, for descriptions of the first indication information, the second indication information, and the like, reference may be made to descriptions of the method embodiment shown in FIG. 2, and details are not described herein again. It may be understood that for specific descriptions of the logic circuit 901 and the interface 902, reference may be made to descriptions of the processing unit, the sending unit, and the receiving unit shown in FIG. 4, and details are not described herein again.

It may be understood that, the communication apparatus shown in this embodiment of this application may implement the method in embodiments of this application in a form of hardware, or may implement the method in embodiments of this application in a form of software. This is not limited in this embodiment of this application.

For specific implementations of the embodiment shown in FIG. 5, refer to the foregoing embodiments. Details are not described herein again.

An embodiment of this application further provides a communication system. The communication system includes a network device and a terminal device. The network device and the terminal device may be configured to perform the method in any one of the foregoing method embodiments (FIG. 2).

In addition, this application further provides a computer program. The computer program is used to implement operations and/or processing performed by the network device in the method provided in this application.

This application further provides a computer program. The computer program is used to implement operations and/or processing performed by the terminal device in the method provided in this application.

This application further provides a computer-readable storage medium. The computer-readable storage medium stores computer code. When the computer code is run on a computer, the computer is enabled to perform operations and/or processing performed by the network device in the method provided in this application.

This application further provides a computer-readable storage medium. The computer-readable storage medium stores computer code. When the computer code is run on a computer, the computer is enabled to perform operations and/or processing performed by the terminal device in the method provided in this application.

This application further provides a computer program product. The computer program product includes computer code or a computer program. When the computer code or the computer program is run on a computer, operations and/or processing performed by the network device in the method provided in this application are/is performed.

This application further provides a computer program product. The computer program product includes computer code or a computer program. When the computer code or the computer program is run on a computer, operations and/or processing performed by the terminal device in the method provided in this application are/is performed.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on an actual requirement to achieve the technical effects of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the related art, or all or a part of the technical solutions may be implemented in a form of a software product. The computer software product is stored in a readable storage medium, and includes several instructions for instructing a computer device (which may be a personal computer, a server, a network device, or the like) to perform all or some of the operations of the methods described in the embodiments of this application. The readable storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a first transmit precoding matrix indicator TPMI index, wherein the first TPMI index indicates a first uplink precoding matrix, a number of transmit antenna ports corresponding to the first uplink precoding matrix is 3, the first uplink precoding matrix is obtained based on an order 2M and a phase offset K of phase shift keying PSK modulation, and M is an integer greater than or equal to 3; and
sending uplink data based on the first uplink precoding matrix.

2. The method according to claim 1, wherein the first uplink precoding matrix is a precoding matrix whose number of rows is 3 and whose number of columns is a number of uplink transmission layers.

3. The method according to claim 2, wherein the first uplink precoding matrix is a product of a first coefficient and a first matrix, at least one element in the first matrix is *e^{ik}, i* is an imaginary symbol, *k* is obtained based on M and K, the first coefficient is a positive number, and a value range of K is $\left(-\frac{π}{M},\frac{π}{M}\right)$.

4. The method according to claim 3, wherein ${e}^{ik} = {e}^{i \left[\frac{\left(n-1\right) π}{M}+K\right]}$, and *n* is a positive integer not greater than 2M.

5. The method according to claim 1, wherein the first uplink precoding matrix comprises a zero element.

6. The method according to claim 1, wherein a first codebook comprises the first uplink precoding matrix, a number of transmit antenna ports corresponding to the first codebook is 3, and an order of PSK modulation that is used by the first codebook is greater than or equal to 6.

7. The method according to claim 6, wherein the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right] ,$ wherein
*A* is the first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

8. The method according to claim 7, wherein each codeword in the second codebook W has a corresponding TPMI index.

9. The method according to claim 7, wherein each codeword in the codebook subset of the second codebook W has a corresponding TPMI index.

10. A communication method, wherein the method comprises:
sending a first transmit precoding matrix indicator TPMI index, wherein the first TPMI index indicates a first uplink precoding matrix, a number of transmit antenna ports corresponding to the first uplink precoding matrix is 3, the first uplink precoding matrix is obtained based on an order 2M and a phase offset K of phase shift keying PSK modulation, M is an integer greater than or equal to 3, and the first uplink precoding matrix is used to send uplink data.

11. The method according to claim 10, wherein the first uplink precoding matrix is a precoding matrix whose number of rows is 3 and whose number of columns is a number of uplink transmission layers.

12. The method according to claim 11, wherein the first uplink precoding matrix is a product of a first coefficient and a first matrix, at least one element in the first matrix is *e^{ik}, i* is an imaginary symbol, *k* is obtained based on M and K, the first coefficient is a positive number, and a value range of K is $\left(-\frac{π}{M},\frac{π}{M}\right)$.

13. The method according to claim 12, wherein ${e}^{ik} = {e}^{i \left[\frac{\left(n-1\right) π}{M}+K\right]}$, and *n* is a positive integer not greater than 2M.

14. The method according to claim 10, wherein the first uplink precoding matrix comprises a zero element.

15. The method according to claim 10, wherein a first codebook comprises the first uplink precoding matrix, a number of transmit antenna ports corresponding to the first codebook is 3, and an order of PSK modulation that is used by the first codebook is greater than or equal to 6.

16. The method according to claim 15, wherein the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right] ,$ wherein
*A* is the first coefficient, the first coefficient is a positive number, *J* is a maximum number of uplink transmission layers, *J* is a positive integer, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, *n* is a positive integer not greater than 2M, and a value range of K is $\left(-\frac{π}{M},\frac{π}{M}\right)$.

17. The method according to claim 16, wherein each codeword in the second codebook W has a corresponding TPMI index.

18. The method according to claim 16, wherein each codeword in the codebook subset of the second codebook W has a corresponding TPMI index.

19. A communication apparatus, comprising a module or unit configured to perform the method according to any one of claims 1 to 18.

20. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 18 by using a logical circuit or by executing code instructions.

21. A communication system, comprising: a terminal device configured to perform the method according to any one of claims 1 to 9, and a network device configured to perform the method according to any one of claims 10 to 18.

22. A communication method, wherein the method comprises:
receiving a first transmit precoding matrix indicator TPMI index, wherein the first TPMI index indicates a first uplink precoding matrix, a number of transmit antenna ports corresponding to the first uplink precoding matrix is 3, the first uplink precoding matrix is obtained based on an order 2M and a phase offset K of phase shift keying PSK modulation, and M is an integer greater than or equal to 3; and
sending uplink data based on the first uplink precoding matrix, wherein
a first codebook comprises the first uplink precoding matrix, a number of transmit antenna ports corresponding to the first codebook is 3, an order of PSK modulation that is used by the first codebook is greater than or equal to 6, the first codebook is a second codebook W or a codebook subset of the second codebook W, and the second codebook W is: $W = A ⋅ \left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right] ,$ wherein
*A* is a first coefficient, the first coefficient is a positive number, *J* is a maximum number of uplink transmission layers, *J* is a positive integer, at least one element in each column of $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is a non-zero element, an element in $\left[\begin{matrix}{x}_{11} & ⋯ & {x}_{1 J} \\ {x}_{21} & ⋯ & {x}_{2 J} \\ {x}_{31} & ⋯ & {x}_{3 J}\end{matrix}\right]$ is 0 or ${e}^{i \left[\frac{\left(n-1\right) π}{M}+K\right]}$, *n* is a positive integer not greater than 2M, and a value range of K is $\left(-\frac{π}{M},\frac{π}{M}\right)$.

23. The method according to claim 22, wherein the first uplink precoding matrix comprises a zero element.

24. The method according to claim 22, wherein each codeword in the second codebook W has a corresponding TPMI index.

25. The method according to claim 22, wherein each codeword in the codebook subset of the second codebook W has a corresponding TPMI index.
